# FASCICULE DE BREVET EUROPEEN

(11) **EP 2 144 345 B1**
(45) Date de publication et mention de la délivrance du brevet: **09.03.2011**
(21) Numéro de dépôt: 09164782.6
(22) Date de dépôt: 07.07.2009
(51) Int. Cl.: H02H 7/08, H02H 3/16, B60L 3/04, B60L 9/00

(54) **Système d'alimentation électrique pour moteur triphasé à aimants permanents**
Elektrisches Einspeisesystem für Dreiphasenmotor mit Dauermagneten
Power supply system for a three-phase motor with permanent magnets

(30) Priorité: 10.07.2008 FR 0854713
(43) Date de publication de la demande: 13.01.2010
(73) Titulaire: ALSTOM Transport SA, 92300 Levallois-Perret (FR)
(72) Inventeur: Giacomoni, Olivier, 65290 JUILLAN (FR); Desportes, Guillaume, 65700 MAUBOURGUET (FR); Belin, Sébastien, 65800 AUREILHAN (FR); Cypers, David, 65310 ODOS (FR)
(74) Mandataire: Jacobson, Claude

(56) Documents cités:
- EP-A- 0 718 143
- WO-A-98/10971
- DE-A1- 3 228 954
- JP-A- 2007 306 642

## Description

La présente invention concerne un système d'alimentation électrique pour moteur triphasé à aimants permanents, notamment pour véhicule ferroviaire, et plus particulièrement un tel système comprenant un onduleur connecté à une première extrémité de chacun des enroulements des trois phases du moteur, et un contacteur d'isolement disposé sur au moins deux desdites phases entre l'onduleur et ladite première extrémité de l'enroulement respectif, les deuxièmes extrémités des trois enroulements étant reliées à un point commun.

Un tel système est connu du document JP 2007 306642 A.

Le contacteur d'isolement permet, en cas de défaut, d'isoler le moteur de l'onduleur, ce qui convient au cas de défaut externe au moteur. Cette mesure est toutefois insuffisante dans le cas d'un défaut interne, plus particulièrement lorsque deux phases viennent en court-circuit à l'intérieur du moteur, ou à l'extérieur du moteur.

En effet, le moteur à aimants permanents étant constamment fluxé, il développe lorsqu'il est en rotation une force électromotrice proportionnelle à sa vitesse de rotation. En cas de court-circuit interne ou externe moteur, le courant de court-circuit est donc maintenu aussi longtemps que le moteur tourne. On encourt donc en premier lieu un échauffement pouvant aller jusqu'à causer un incendie. Par ailleurs, ce courant engendre un couple pulsatoire entretenu (hors cas court-circuit triphasé des bornes du moteur) pouvant mettre en cause la stabilité du boggie dans le cas d'un véhicule ferroviaire.

On est donc contraint, en cas de défaut interne au moteur, non seulement à ouvrir le contacteur d'isolement, mais à stopper le véhicule.

La présente invention vise à palier cet inconvénient.

Plus particulièrement, l'invention a pour but de fournir un système d'alimentation du moteur permettant d'éviter tout courant de court-circuit en cas de défaut interne, et donc tout échauffement et toute instabilité mécanique.

A cet effet, l'invention a tout d'abord pour objet un système d'alimentation électrique pour moteur triphasé à aimants permanents, notamment pour véhicule ferroviaire, comprenant un onduleur connecté à une première extrémité de chacun des enroulements des trois phases du moteur, et un contacteur d'isolement disposé sur au moins deux desdites phases entre l'onduleur et ladite première extrémité de l'enroulement respectif, les deuxièmes extrémités des trois enroulements étant reliées à un point commun, ledit système comprenant un organe d'isolement de neutre disposé sur au moins deux phases entre le point commun et ladite deuxième extrémité de l'enroulement respectif.

On verra ci-après qu'un tel agencement permet d'isoler individuellement chaque phase du moteur, et donc d'empêcher l'installation d'un courant de court-circuit.

Dans un mode de réalisation particulier, le contacteur d'isolement et le contacteur de neutre sont disposés aux extrémités des enroulements de deux mêmes phases du moteur.

L'invention a également pour objet un procédé de mise hors service d'un moteur électrique triphasé à aimants permanents, notamment de véhicule ferroviaire, en cas de défaut interne, ledit moteur étant alimenté par un onduleur connecté à une première extrémité de chacun des enroulements des trois phases du moteur, un contacteur d'isolement étant disposé sur au moins deux desdites phases entre l'onduleur et ladite première extrémité de l'enroulement respectif, les deuxièmes extrémités des trois enroulements étant reliées à un point commun, ledit procédé comprenant l'étape consistant à ouvrir ledit contacteur d'isolement et un organe d'isolement de neutre disposé sur au moins deux phases entre le point commun et ladite deuxième extrémité de l'enroulement respectif.

L'invention a également pour objet un véhicule ferroviaire, comprenant un moteur électrique triphasé à aimants permanents, ledit véhicule comprenant un système d'alimentation électrique tel que décrit ci-dessus.

On décrira maintenant, à titre d'exemple non limitatif, un mode de réalisation particulier de l'invention, en référence aux dessins schématiques annexés dans lesquels :
- la figure 1 est un schéma électrique d'une chaîne de traction ferroviaire de l'art antérieur ; et
- la figure 2 est un schéma électrique d'une chaîne de traction ferroviaire comportant un système d'alimentation selon l'invention.

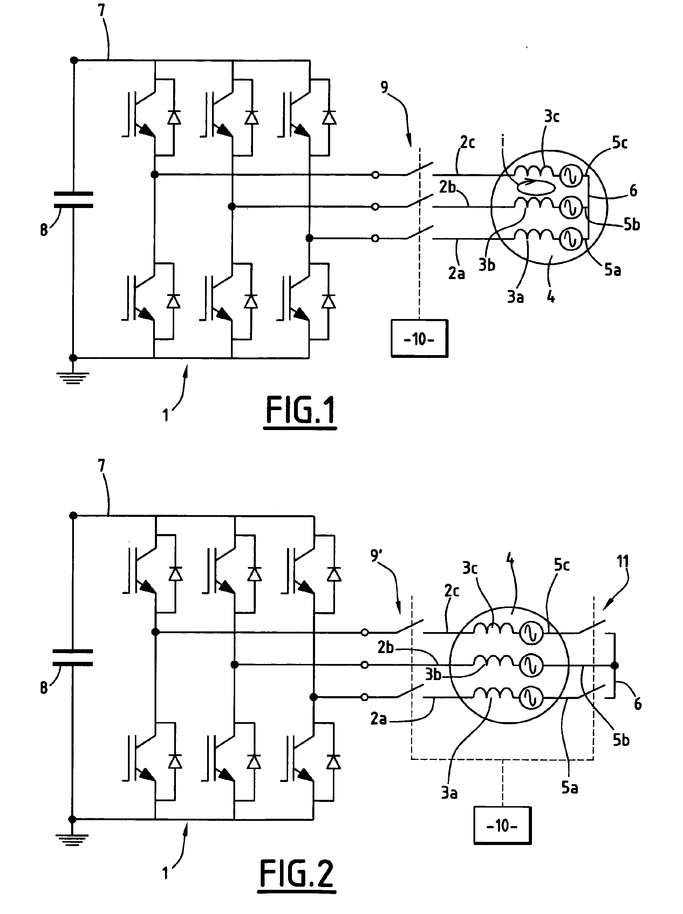

On voit à la figure 1 une chaîne de traction comportant de façon connue un onduleur triphasé 1 dont chaque phase est reliée en sortie à une extrémité 2a, 2b et 2c respectivement d'un enroulement 3a, 3b et 3c d'un moteur à aimant permanent 4. Les autres extrémités 5a, 5b et 5c des enroulements 3a, 3b et 3c sont reliées au point commun 6 neutre du moteur 4. L'onduleur 1 est lui-même alimenté à partir d'un bus continu 7 relié à la masse par l'intermédiaire d'un condensateur d'entrée 8.

De façon également connue, les trois phases en sortie de l'onduleur 1 sont connectées aux enroulements du moteur 4 par l'intermédiaire d'un contacteur triple d'isolement 9 qui permet d'isoler le moteur de l'onduleur en cas de défaut. Le circuit 10 de détection de défaut et de commande du contacteur 9 étant connu, ne sera pas décrit plus en détail.

On voit que dans le cas où survient un défaut de court-circuit interne au moteur, par exemple entre les extrémités 2b et 2c des enroulements 3b et 3c du moteur, un courant de court-circuit *i* va s'installer dans les enroulements 3b et 3c même après ouverture du contacteur d'isolement 9, du fait de la force électromotrice générée par la rotation du moteur. Il est donc nécessaire d'arrêter le véhicule sur lequel le moteur 4 est monté.

Ce problème est résolu par le montage représenté à la figure 2. Les références de la figure 1 ont été conservées sur cette figure 2 pour les éléments homologues.

Conformément à l'invention, un contacteur de neutre 11 est ajouté entre les deuxièmes extrémités des enroulements du moteur 4 et le point commun 6. En variante du contacteur 11, on pourrait utiliser tout autre organe d'isolement tel qu'un sectionneur ou un fusible commandé de type protistor. En fait, le contacteur 11 est ici un contacteur double entre les extrémités 5a et 5c des enroulements 3a et 3c et le point 6. De même, le contacteur 9' est maintenant un contacteur double entre les extrémités 2a et 2c des enroulements 3a et 3c du moteur 4. Le contacteur 11 est ici commandé par le même circuit 10 que le contacteur 9', dans les mêmes conditions. Il pourrait également être commandé uniquement lors de la détection de défauts internes du moteur.

On constate que les contacteurs 9 et 11 empêchent, par leur ouverture, la formation de boucles entre les enroulements du moteur, dans lesquelles pourrait s'établir un courant de court-circuit. Ces deux contacteurs étant ouverts, il est maintenant possible de continuer à faire circuler le véhicule en mode dégradé, en entraînant le moteur en rotation même après formation d'un court-circuit interne au moteur.

## Revendications

1. Système d'alimentation électrique pour moteur (4) triphasé à aimants permanents, notamment pour véhicule ferroviaire, comprenant un onduleur (1) connecté à une première extrémité (2a, 2b, 2c) de chacun des enroulements (3a, 3b, 3c) des trois phases du moteur, et un contacteur d'isolement (9) disposé sur au moins deux desdites phases entre l'onduleur et ladite première extrémité de l'enroulement respectif, les deuxièmes extrémités (5a, 5b, 5c) des trois enroulements étant reliées à un point commun (6), **caractérisé par le fait qu'**il comprend un organe d'isolement de neutre (11) disposé sur au moins deux phases entre le point commun et ladite deuxième extrémité de l'enroulement respectif.

2. Système d'alimentation selon la revendication 1, dans lequel le contacteur d'isolement et le contacteur de neutre sont disposés aux extrémités des enroulements de deux mêmes phases du moteur.

3. Procédé de mise hors service d'un moteur électrique (4) triphasé à aimants permanents, notamment de véhicule ferroviaire, en cas de défaut interne, ledit moteur étant alimenté par un onduleur (1) connecté à une première extrémité (2a, 2b, 2c) de chacun des enroulements (3a, 3b, 3c) des trois phases du moteur, un contacteur d'isolement (9) étant disposé sur au moins deux desdites phases entre l'onduleur et ladite première extrémité de l'enroulement respectif, les deuxièmes extrémités (5a, 5b, 5c) des trois enroulements étant reliées à un point commun (6), **caractérisé par le fait qu'**il comprend l'étape consistant à ouvrir ledit contacteur d'isolement et un organe d'isolement de neutre (11) disposé sur au moins deux phases entre le point commun et ladite deuxième extrémité de l'enroulement respectif.

4. Véhicule ferroviaire, comprenant un moteur électrique triphasé à aimants permanents, **caractérisé par le fait qu'**il comprend un système d'alimentation électrique selon l'une quelconque des revendications 1 et 2.

## Claims

1. An electrical power supply system for a three-phase permanent magnet motor (4), especially for a railway vehicle, comprising an inverter (1) connected to a first end (2a, 2b, 2c) of each of the windings (3a, 3b, 3c) of the three phases of the motor, and an isolation contactor (9) arranged on at least two of said phases, between the inverter and the first end of the respective winding, the second ends (5a, 5b, 5c) of the three windings being connected to a common point (6), **characterized in that** it comprises a neutral isolation device (11) arranged on at least two phases, between the common point and the second end of the respective winding.

2. A power supply system according to claim 1, wherein the isolation contactor and the neutral contactor are arranged at the ends of the windings of the same two phases of the motor.

3. A method for putting out of action an electrical three-phase permanent magnet motor (4), especially of a railway vehicle, in the event of an internal fault, the motor being supplied with power by an inverter (1) connected to a first end (2a, 2b, 2c) of each of the windings (3a, 3b, 3c) of the three phases of the motor, an isolation contactor (9) being arranged on at least two of said phases, between the inverter and the first end of the respective winding, the second ends (5a, 5b, 5c) of the three windings being connected to a common point (6), **characterized in that** it comprises the step consisting in opening the isolation contactor and a neutral isolation device (11) arranged on at least two phases, between the common point and the second end of the respective winding.

4. A railway vehicle, comprising an electrical three-phase permanent magnet motor, **characterized in that** it comprises an electrical power supply system according to either claim 1 or claim 2.

## Patentansprüche

1. Elektrisches Versorgungssystem für Dreiphasenmotor (4) mit Permanentmagneten, insbesondere für Eisenbahnfahrzeug, mit einem Wechselrichter (1), der an ein erstes Ende (2a, 2b, 2c) jeder der Wicklungen (3a, 3b, 3c) der drei Phasen des Motors angeschlossen ist, und einem Isolierungsschütz (9), das an zumindest zwei der Phasen zwischen dem Wechselrichter und dem ersten Ende der jeweiligen Wicklung angeordnet ist, wobei die zweiten Enden (5a, 5b, 5c) der drei Wicklungen mit einem gemeinsamen Punkt (6) verbunden sind, **dadurch gekennzeichnet, dass** das System ein Nullpunktisolierungsorgan (11) aufweist, welches an zumindest zwei Phasen zwischen dem gemeinsamen Punkt und dem zweiten Ende der jeweiligen Wicklung angeordnet ist.

2. Versorgungssystem gemäß Anspruch 1, bei welchem das Isolierungsschütz und das Nullpunktschütz an den Enden der Wicklungen von zwei gleichen Phasen des Motors angeordnet sind.

3. Verfahren zum Abschalten eines elektrischen Dreiphasenmotors (4) mit Permanentmagneten, insbesondere eines Eisenbahnfahrzeugs, im Falle eines internen Fehlers, wobei der Motor von einem Wechselrichter (1) versorgt wird, welcher an ein erstes Ende (2a, 2b, 2c) jeder der Wicklungen (3a, 3b, 3c) der drei Phasen des Motors angeschlossen ist, wobei ein Isolierungsschütz (9) an zumindest zwei der Phasen zwischen dem Wechselrichter und dem ersten Ende der jeweiligen Wicklung angeordnet ist, wobei die zweiten Enden (5a, 5b, 5c) der drei Wicklungen mit einem gemeinsamen Punkt (6) verbunden sind, **dadurch gekennzeichnet, dass** das Verfahren den Schritt aufweist, der darin besteht, das Isolierungsschütz und ein Nullpunktisolierungsorgan (11), welches an zumindest zwei Phasen zwischen dem gemeinsamen Punkt und dem zweiten Ende der jeweiligen Wicklung angeordnet ist, zu öffnen.

4. Eisenbahnfahrzeug mit einem elektrischen Dreiphasenmotor mit Permanentmagneten, **dadurch gekennzeichnet, dass** es ein elektrisches Versorgungssystem gemäß irgendeinem der Ansprüche 1 und 2 aufweist.
